Europäisches Patentamt

(19) European Patent Office  (11) Publication number: **0 141 543**

Office européen des brevets  **A2**

(12) **EUROPEAN PATENT APPLICATION**

(21) Application number: **84306839.6**  (51) Int. Cl.⁴: **C 10 J 3/50**

(22) Date of filing: **08.10.84**

(30) Priority: **21.10.83 US 544195**

(43) Date of publication of application:
**15.05.85 Bulletin 85/20**

(84) Designated Contracting States:
**BE DE FR GB IT**

(71) Applicant: **KRW Energy Systems Inc.**
**Three Greenway Plaza**
**Houston, Texas 77046(US)**

(72) Inventor: **Wowczuk, Andrew**
**111 Briar Crest Drive**
**Monrowville, PA 15146(US)**

(72) Inventor: **Schwab, John Allen**
**205 Dexter Road**
**Scottdale, PA 15683(US)**

(74) Representative: **van Berlyn, Ronald Gilbert**
**23, Centre Heights**
**London, NW3 6JG(GB)**

(54) **Non-mechanical conveyancing system and process.**

(57) Apparatus for conveying solid particles into a carbonaceous material gasifier, comprising a vessel defining a vessel outlet, a separator defining a separator particle outlet for separating solid particles from a fluid, fluid conducting means for conducting a fluid from the vessel outlet to the separator, a vertical conduit attached flowingly to the particle outlet, a horizontal conduit attached flowingly to the vertical conduit to form an L-shaped joint, and a sloping conduit having an upper end and a lower end, the upper end attached flowingly to the horizontal conduit and the lower end penetrating the vessel and wherein the sloping conduit has a slope of between 30° and 70° downward from the horizontal conduit.

EP 0 141 543 A2

FIG.8

Croydon Printing Company Ltd.

1                                    50,811

## NON-MECHANICAL
## CONVEYANCING SYSTEM AND PROCESS

This invention relates to a system and method for transporting particulate solids from a region of low pressure to a region of higher pressure in a coal gasification system.

Various chemical processing systems which use some sort of solid particulate material face the problem of conveying the solid particulate material from one point to another. This is generally solved easily where the material must be moved from a point of high pressure to a point of low pressure merely by a stream of gas which flows from high pressure to low pressure and entrains the particulate in the flowing gas stream. This solution, however, will not work where the particulate must be conveyed from a region of low pressure to a region of high pressure.

One solution has been the use of non-mechanical or "L"-valves. In general, these valves are comprised of a vertical pipe joined flowingly at one end to an end of a horizontal pipe to form an "L". Additionally, a source of fluidizing gas is positioned in the vertical pipe somewhere above the joint.

0193L

0141543
50,811

In principle, as particulate material is poured into the vertical leg, it builds in a pile in the horizontal pipe below the vertical leg until the top of the pile reaches the upper surface of the horizontal pipe, at which time the vertical leg begins to fill. The slope of the pile at this height is the "angle of repose" of the particulate material. The angle of repose is related to particle interactions and is therefore subject to variables such as particle size and shape, and also may be influenced by any stickiness of those particles. As the vertical leg fills, no more material will move into the horizontal leg past the edge of the pile, which is the apex of the angle of repose. If a gas is introduced at the fluidizing gas source in the vertical leg, the gas will take the easiest path out of the vertical leg. As long as there is no material above the gas inlet, the gas will flow back up above into the region of low pressure, or "blow back". If particulate material continues to fill the vertical leg, however, there is a height of material in the vertical leg at which the resistance to gas flow of the material above the fluidizing gas source is sufficient to cause some of the fluidizing gas to flow into the high pressure area, moving material away from the apex of the angle of repose into the high pressure area. It is understood of course that the pressure of the fluidizing gas is higher than that of the high pressure area.

This device works well when the pressure value of the high pressure region does not vary significantly and when the particulate material is of a relatively uniform density and particle size. There are, however, several situations in which this device could become unsatisfactory. If the pressure of the high pressure region varies, or if the particulate material is of a lower bulk density than expected, then either the height of the vertical leg must be extended or the pressure of the fluidizing gas source must be increased, or more likely, a combination of both.

It is thus the principal object of the present invention to provide a non-mechanical conveyancing system and apparatus which is operable where the pressure of the high pressure region varies and where there is a possibility that the particulate material will be of lower bulk density than expected.

With this object in view, the present invention resides in an apparatus for conveying solid particles into a carbonaceous material gasifier comprising a vessel with an outlet, a separator having a particle outlet for separating solid particles from a fluid, fluid conducting means connected between the vessel outlet and the separator, a vertical conduit attached to the particle outlet, a horizontal conduit attached to the vertical conduit to form an "L"-shaped joint, and a sloping conduit attached between the horizontal conduit and the vessel, where the sloping conduit has a slope of between 30° and 70° downward from the horizontal conduit.

The invention will become more readily apparent from the following description of a preferred embodiment thereof shown, by way of example only, in the accompanying drawings in which:

Figure 1 is a partial cross-sectional view of a fluidized bed gasification system in accordance with the state of the art;

Figure 2 is a sectional elevational view of a non-mechanical conveyancing system in accordance with the invention;

Figure 3 is a partial sectional elevational view of a non-mechanical conveyancing system in accordance with the invention;

Figure 4 is an elevational view of the non-mechanical conveyancing system of Figure 3 taken at IV-IV;

Figure 5 is a partial sectional elevational view of a non-mechanical conveyancing system in accordance with the invention;

Figure 6 is a partial sectional elevational view of a non-mechanical conveyancing system in accordance with the invention;

Figure 7 is a partial sectional elevational view of a non-mechanical conveyancing system in accordance with the invention; and

0141543
50,811

Figure 8 is a schematic of a gasification system in accordance with the invention.

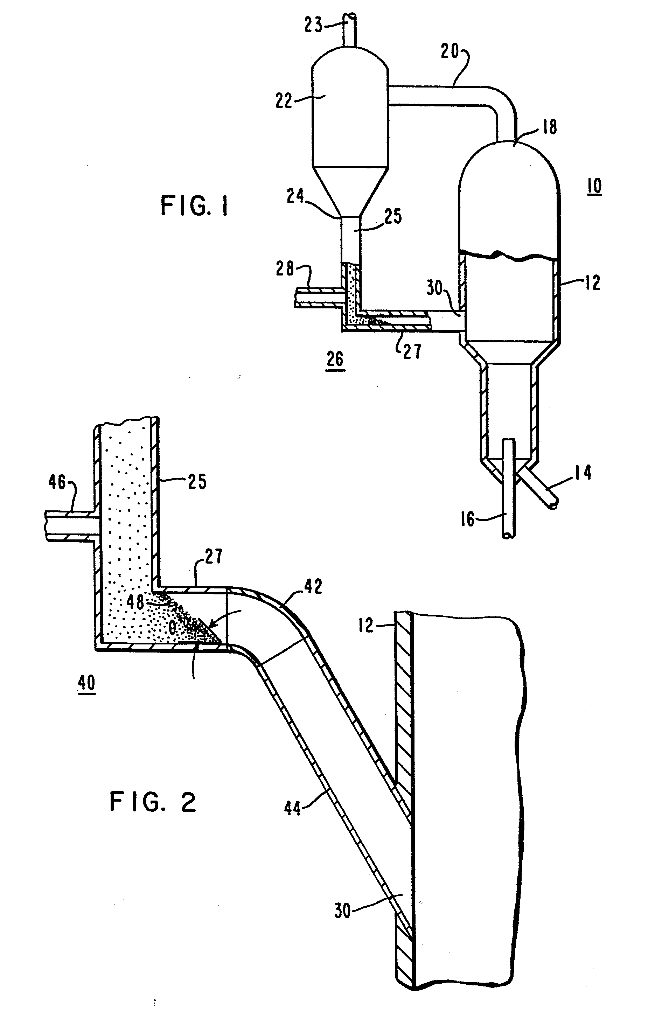

Referring now to Figure 1, there is shown a fluidized bed gasification system 10 comprising an elongated vessel 12. Penetrating the bottom of the vessel 12 is an ash discharge opening 14, and disposed through the bottom of the vessel 12 is a process mediums injection tube 16 for the injection of process mediums such as coal particles, a combustible gas, steam, and a source of oxygen, such as air or pure oxygen. Penetrating the top of the vessel 12 is a product gas discharge 18 and product gas discharge piping 20 connected to a centrifugal separator 22. The centrifugal separator 22 has two means of discharge. The first, at the top of the separator 22, is the product gas outlet 23 and the second, at the bottom of the separator 22, is the particle discharge 24. Attached to and physically below the particle discharge 24 is a particulate conveyancing means 26 such as a non-mechanical valve as shown. A vertical standpipe 25 is connected to a horizontal conduit 27 to form an "L". Also associated with the particle conveyancing means 26 is a fluidizing gas source 28 disposed in the vertical standpipe 25 above the horizontal conduit 27 and at the end of the horizontal conduit 27 opposite the vertical standpipe 25 is the particle inlet 30 to the vessel 12.

The operation of the gasification system 10 is as follows: Various process mediums are injected into the vessel 12 through the injection tube 16. Within the vessel 12, the coal particles are supported in a fluidized bed by the continuous injection of various process mediums. In the presence of the oxygen and at the operating temperature of the gasification system 10, which is typically between 871°C and 982°C or higher, a portion of the coal particles is combusted to provide heat for the continued operation of the gasification system 10. Over a period of time, the carbon contained in the coal reacts with the other process mediums and is gasified by the heat of combustion. The product gas is then discharged out of the vessel 12 through the product gas discharge 18. This gas, however, contains entrained

0193L

particles in either a liquid or a solid state which are comprised of particles of coal, sintered coal called char, and various ash compounds. These particles must be separated from the product gas before the product gas can be used. Further, since a portion of these particles contains residual carbon, it would be advantageous to return them to the gasifier vessel 12. Consequently, the product gas is conveyed from the vessel 12 through the product gas discharge piping 20 into the centrifugal separator 22 which separates a high proportion of the particles from the product gas. The product gas is then discharged from the centrifugal separator through the product gas outlet 23 and the particles are discharged through the particle discharge 24 and into the standpipe 25. The particle conveyancing means 26, using a fluidizing gas injected through the fluidizing gas source 28 at a pressure above the pressure of the vessel 12 into the lower portion of the vertical standpipe 25, behaves as a non-mechanical valve known in the art, and the particles from the standpipe 25 are conveyed into the vessel 12 through the horizontal conduit 27 and the particle inlet 30.

There are, however, several situations in which this device could become unsatisfactory. First, it is possible that the gasifier system 10 could act with a pulsating pressure, and molten or sinterable particles from the vessel 12 could be forced into the particle inlet 30 and plug the horizontal conduit 27.

A second possibility is related to the dependency of the density of the particulate material on numerous parameters outside the ability of a designer to control or predict. In the event that the density of the particulate material is less than anticipated in design, standpipe 25 height might be inadequate to present "blow back" and the conveyancing system would be unable to continuously transfer solids by the conventional technique. In such an event, continuous injection of fluidizing gas through the fluidizing gas inlet 28 would result in "blow back" of the material in the standpipe 25 into the centrifugal separator 22.

Referring now to Figure 2, there is shown a

0193L

non-mechanical conveyancing system 40 in accordance with the invention. Similarly to Fig. 1, there is shown a standpipe 25 through which particles will be conveyed, and the non-mechanical conveyancing system 40 discharges particles into the vessel 12 through the particle inlet 30. The standpipe 25 is attached to the horizontal conduit 27. Further attached to the horizontal conduit 27 is an elbow 42 and a downwardly sloping section 44. It can be seen that particles falling through the standpipe 25 can continue to flow through the horizontal conduit 27, through the elbow 42 and the sloping section 44, through the particle inlet 30, and into the vessel 12. Penetrating the standpipe 25 above the horizontal section 42 is a fluidizing gas inlet 46. Also shown in the horizontal conduit 27 is particle bulk 48 resting at the angle of repose θ.

The operation of the non-mechanical conveyancing system is as follows: Particles fall from the centrifugal separator 22 into the standpipe 25. Absent from fluidizing gas injection, the particles will fall to the bottom of the horizontal section 42 and gradually pile up as shown by particle bulk 48. In normal operation, fluidizing gas will be injected into the standpipe through the fluidizing gas inlet 46. Assuming that the height of the particles within the standpipe 25 is sufficient to resist the fluidizing gas pressure and also to "seal" it against bulk upward flow, the fluidizing gas will flow downward and will cause material below the fluidizing gas inlet to move towards the elbow 42, and downward into the particle inlet 30 of the vessel 12.

In some fluidized bed systems the dynamics of the gasification vessel 12 are irregular. In other words, instead of a constant pressure and continuous, even fluidization of small particles, conditions may be such that large bubbles are formed in the fluidized bed and "slugging" occurs. This may be caused by large variation in particle size, change in process injection rates or change in downstream system pressure. In any case, pressure variations within the bed may occur which cause high pressure perturbations as large as 20 to 50% of the pressure drop across the vessel 12. These pressure fluctuations could cause severe "blow-back" of particles into a state-of-the-art L valve. One of the advantages of the non-mechanical conveyance system 40 is that particles, once conveyed past the angle of repose and out of the horizontal conduit 27, are not dependent on further gas action but rather fall by gravity through the sloping section 44 into the vessel 12.

With respect to the horizontal conduit 27, it must be of a length L longer than the bottom of the particle bulk 48. If this were not the case, particles would continuously flow into the sloping section 44 and it is possible that a seal would never be formed in the vertical standpipe 25. By well-known techniques of analysis of the particles of material being conveyed, the angle of repose $\theta$ for those particles can be determined. From this angle, a minimum length L can be determined by:

$$L = \frac{D}{\tan \theta,}$$

where D is the diameter of the horizontal conduit. Based on experience, it is wise to add margin for the probability of angle of repose variations, such a particle size, shape or chemical constituents. A margin of 50% or more is preferred, giving:

$$L \geq 1.5 \frac{D}{\tan \theta.}$$

It should be noted that the primary restraint on the diameter D is to reduce pressure losses in the horizontal conduit.

The angle of the sloping section 44 must be greater than the angle of repose for the particles being conveyed. In this way any particles which get to the sloping section 44 will not hang up but will fall into the vessel 12. For many particulate materials, the angle of repose is between 30° and 70°. Therefore, a suitable angle will generally be between 30° and 70° downward from the horizontal conduit 27 and preferably about 70° for particles discharged from a coal gasification system.

0193L

This non-mechanical conveyancing system 40 has several advantages over the prior art. First, fluidizing gas pressure need only be great enough to cause the particles to reach the elbow 42, at which point they will fall into the sloping section 44 and into the vessel 12. It should be noted that merely attaching a classical L valve to the vessel at the end of the horizontal conduit 27 would be insufficient, primarily because "blow-back" could still occur, leaving particles from the hot vessel resting in the horizontal conduit 27. The advantage of the sloping section 44 is that even if particles are blown back into the sloping section they will quickly fall back into the vessel 12 when the pressure drops. As a consequence, the system 40 is a "self-clearing" system.

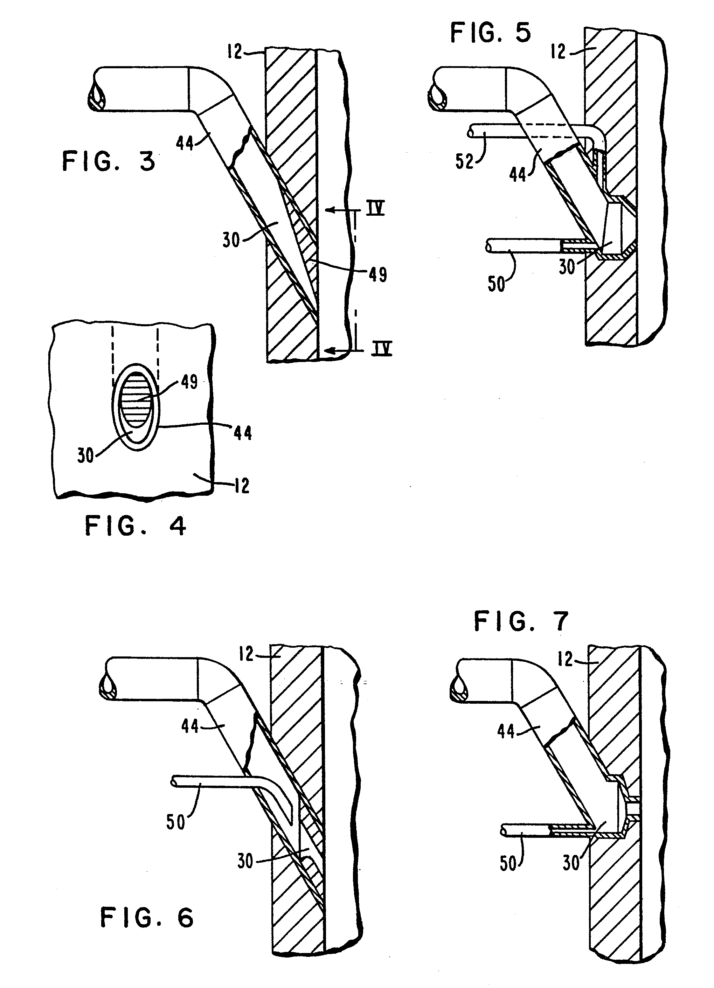

It is conceivable, based on the relative position of the particle inlet with respect to the fluidized bed contained in the vessel 12, that greater pressure drop perturbations would be seen than 20 to 50%, or, if the fluidized bed is circulating and the direction of the particles within the bed were in an upward direction at that point more particles would have a tendency to be blown back into the sloping section 44 than other positions. Consequently, Figs. 3, 4, 5, 6 and 7 show alternative embodiments of the sloping section 44 and the particle inlet 30.

Looking at Figs. 3 and 4, there can be seen a particle inlet 30 with an insert 49 which results in a reduced cross-sectional area. Since there is very little gas flow through the system 40 and primarily only solids flow, reducing the cross-sectional area of the particle inlet 30 will not change the system 40 capacity but will reduce the area available for particle blow-back.

Looking now at Figs. 5, 6 and 7 there can be seen alternative embodiments of the particle inlet 30 using an auxiliary fluidization jet 50 which may act in the manner of a nozzle to increase the pressure within the sloping section 44 and thus reduce any possibility of blow-back.

Note that Fig. 5 further comprises a backup jet 52 in the event of pressure fluctuations greater than the capacity of the auxiliary fluidization jet 50.

0193L

0141543
50,811

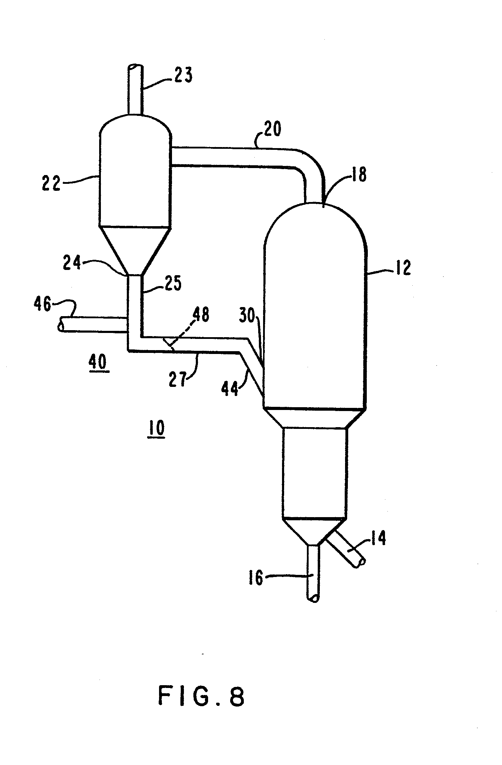

Referring now to Figure 8 there is shown a gasification system 10 utilizing a non-mechanical conveyancing system 40 in accordance with the invention. The operation of the gasification system 10 is substantially the same as set forth in the discussion of Figure 1. However, in the operation of the conveyancing system 40, particles are discharged through the particle discharge 24 of the separator 22 and into the standpipe 25. A fluidizing gas is injected through the fluidizing gas source 46 at a pressure above the pressure of the vessel 12 into the vertical standpipe 25. This causes a disturbance in the angle of repose of the particle layer 48 and forces the particles to flow along the horizontal section 27. A short distance beyond the leading edge of the particle layer 48 the particles fall into the sloping section 44. These particles will flow by gravity through the particle inlet 30 and into the vessel 12.

In the event of a pressure surge within the vessel 12, particles may be blown back somewhat up the sloping section 44. However, the particles in the sloping section 44 will only flow upwards until their momentum is dissipated by gravity, contact with the wall or contact with inflowing solids. At this point the particles in the sloping section 44 will again fall into the vessel 12 via gravity.

0193L

What is claim

1. Apparatus for conveying solid particles into a carbonaceous material gasifier comprising:

a vessel (12) defining a vessel outlet (18);

a separator (22), defining a separator particle outlet (24), for separating solid particles from a fluid;

fluid conducting means (20) for conducting a fluid from said vessel outlet to said separator;

a vertical conduit (25) attached flowingly to said particle outlet;

a horizontal conduit (27) attached flowingly to said vertical conduit to form an "L"-shaped joint; and

a sloping conduit (44) having an upper end and a lower end, said upper end attached flowingly to said horizontal conduit and said lower end penetrating said vessel and wherein said sloping conduit has a slope of between 30° and 70° downward from said horizontal conduit.

0193L

FIG. 1

FIG. 2

FIG. 5

FIG. 3

12

44

30

IV

49

IV

12

52

44

50

30

FIG. 4

49

30

44

12

FIG. 7

12

44

50

30

FIG. 6

12

44

50

30

44

50

30

FIG.8